# EUROPÄISCHE PATENTSCHRIFT

(11) **EP 2 753 499 B1**
(45) Veröffentlichungstag und Bekanntmachung des Hinweises auf die Patenterteilung: **03.04.2019**
(21) Anmeldenummer: 12733725.1
(22) Anmeldetag: 11.07.2012
(51) Int. Cl.: B60N 2/847

(54) **HÖHEN- UND NEIGUNGSVERSTELLBARE KOPFSTÜTZE FÜR EINEN FAHRZEUGSITZ**
HEIGHT- AND INCLINATION-ADJUSTABLE HEAD RESTRAINT FOR A VEHICLE SEAT
APPUIE-TÊTE RÉGLABLE EN HAUTEUR ET EN INCLINAISON POUR SIÈGE DE VÉHICULE

(30) Priorität: 09.09.2011 DE 102011112769
(43) Veröffentlichungstag der Anmeldung: 16.07.2014
(73) Patentinhaber: Adient Luxembourg Holding S.à r.l., 1855 Luxembourg (LU)
(72) Erfinder: HARTLAUB, Silvio, 50259 Pulheim (DE)
(74) Vertreter: Finger, Catrin
(86) Internationale Anmeldenummer: PCT/EP2012/063538
(87) Internationale Veröffentlichungsnummer: WO 2013/034337

(56) Entgegenhaltungen:
- EP-A2- 0 175 959
- DE-A1- 2 525 013
- DE-B3-102009 036 896
- FR-A1- 2 564 045
- JP-A- 59 186 746
- US-A1- 2007 164 593

## Beschreibung

Die Erfindung betrifft eine höhen- und/oder neigungsverstellbare Kopfstütze für einen Fahrzeugsitz gemäß dem Oberbegriff des Anspruchs 1.

Im Stand der Technik sind zahlreiche unterschiedliche Neigungsverstellmechanismen für Kopfstützen von Fahrzeugsitzen bekannt. Die US 6 000 760 A beschreibt einen Neigungsverstellmechanismus für eine Kopfstütze eines Fahrzeugsitzes.

Die DE 11 2004 000 602 T5 beschreibt eine Vorrichtung zum Rückwärts- und Vorwärtsbewegen einer Kopfstütze.

Die JP 59 186746A und DE 10 2009 036 896 B3 beschreiben jeweils schwenkbare Rastplatte, welche fest auf einer Schwenkwelle angeordnet sind, wobei die DE 10 2009 036 896 B3 als nächstliegender Stand der Technik betrachtet wird.

Aufgabe der vorliegenden Erfindung ist es, eine gegenüber dem Stand der Technik verbesserten eine höhen- und/oder neigungsverstellbare Kopfstütze für einen Fahrzeugsitz anzugeben.

Hinsichtlich der höhen- und/oder neigungsverstellbaren Kopfstütze für Fahrzeugsitz wird die Aufgabe durch die im Anspruch 1 angegebenen Merkmale gelöst.

Vorteilhafte Weiterbildungen der Erfindung sind Gegenstand der Unteransprüche.

Die höhen- und/oder neigungsverstellbare Kopfstütze für einen Fahrzeugsitz umfasst zumindest ein Halteelement, ein Kopfstützenpolster, eine Kopfstützenstruktur und einen Neigungsverstellmechanismus, welcher zumindest eine Rastplatte, ein Zahnprofil und ein Betätigungselement umfasst, wobei die Rastplatte am Halteelement angeordnet ist und in einem arretierten Zustand des Neigungsverstellmechanismus form- und/oder kraftschlüssig in das Zahnprofil, welches an der Kopfstützenstruktur angeordnet ist, eingreift und wobei die Kopfstützenstruktur an ihrem unteren Ende schwenkbar mit dem Halteelement gekoppelt ist und bei einem Schwenken der Kopfstütze um das Halteelement in einem nicht arretierten Zustand des Neigungsverstellmechanismus die form- und/oder kraftschlüssige Verbindung zwischen Rastplatte und Zahnprofil gelöst ist und derart eine Relativbewegung zwischen Rastplatte und Zahnprofil bewirkt ist. In einem nicht beanspruchten Ausführungsform umfasst die Kopfstütze zumindest ein Halteelement, ein Kopfstützenpolster, eine Kopfstützenstruktur und einen Neigungsverstellmechanismus, welcher zumindest eine Rastplatte und ein Zahnprofil umfasst, wobei die Rastplatte am Halteelement angeordnet ist und wobei das Zahnprofil widerhakenartig ausgeformt ist und derart eine Relativbewegung zwischen Rastplatte und Zahnprofil in Fahrtrichtung in einem arretierten Zustand des Neigungsverstellmechanismus ermöglicht und wobei in einem nicht arretierten Zustand des Neigungsverstellmechanismus eine Relativbewegung zwischen Rastplatte und Zahnprofil entgegen der Fahrtrichtung ermöglicht ist. Dadurch ist ein besonders einfach und kompakt aufgebauter Neigungsverstellmechanismus für eine Kopfstütze eines Fahrzeugsitzes mit einer minimierten Anzahl an bewegten Bauteilen ermöglicht, welcher einfach und kostenreduziert herstellbar ist.

Durch diese kompakte Bauform ist der Neigungsverstellmechanismus vollständig innerhalb der Kopfstütze angeordnet und allseitig vom Kopfstützenpolster umgeben, so dass scharfe Kante und/oder harte Abschnitte des Neigungsverstellmechanismus bedeckt sind und eine Verletzungsgefahr der Fahrzeuginsassen verringert ist.

In einer ersten Ausführungsvariante ist das Zahnprofil zur reversiblen Lösung der form- und/oder kraftschlüssigen Verbindung zwischen Rastplatte und Zahnprofil von der Rastplatte linear oder schwenkend wegbewegbar.

Dabei ist die Rastplatte verschiebbar am Halteelement angeordnet, so dass mittels der Verschiebebewegung die form- und/oder kraftschlüssige Verbindung zwischen Rastplatte und Zahnprofil lösbar ist.

Dabei kann die Rastplatte in Richtung der Sitzlehne oder in horizontaler Richtung verschiebbar am Halteelement angeordnet sein.

Auf diese Weise kann eine Aktuierung des Neigungsverstellmechanismus an die jeweilige Bauform der Kopfstütze, insbesondere die Platzverhältnisse im Innenraum, variabel angepasst werden.

Das Halteelement ist im Wesentlichen u-förmig ausgebildet und umfasst zwei Schenkel und einen waagerecht angeordneten Abschnitt, wobei im jeweiligen Koppelbereich zwischen Schenkel und Abschnitt jeweils ein Absatz angeordnet ist, welcher jeweils einen weiteren waagerecht angeordneten Abschnitt umfasst.

Weiterhin sind an einem unteren Ende des Halteelements die Schenkel als Führungsdorne ausgebildet, welche zumindest abschnittsweise in korrespondierenden Aussparungen in einer Sitzlehne des Fahrzeugsitzes verschiebbar angeordnet sind, so dass eine Höhenverstellung der Kopfstütze relativ zum Fahrzeugsitz ermöglicht ist.

Darüber hinaus ist die Kopfstütze um eine Drehachse schwenkbar ausgebildet, welche aus den waagerecht angeordneten Abschnitten des u-förmigen Halteelements gebildet ist.

Somit sind auf einfache Weise mehrere Funktionen in einem Bauteil integriert. Die waagerecht angeordneten Abschnitte des Halteelements bilden die Drehachse für die Neigungseinstellung der Kopfstütze und die senkrechten Abschnitte bilden die Höhenverstellung der Kopfstütze.

Bevorzugt ist das Zahnprofil aus einer vorgebbaren Anzahl von reihenförmig hintereinander angeordneten Zähnen, Rastelementen oder Rastnasen gebildet. Dabei bestimmt die Anzahl der Zähne, Rastelemente oder Rastnasen eine Anzahl an Einstellpositionen des Neigungsverstellmechanismus.

Das Betätigungselement und ein Aktuierungselement der Rastplatte stehen in mechanischer Wirkverbindung, wobei das Aktuierungselement zumindest abschnittsweise korrespondierend zum Betätigungselement ausgebildet ist. Betätigungselement und Aktuierungselement stehen beispielsweise mittels zweier korrespondierend ausgeformter Formschrägen in mechanischer Wirkverbindung. Aus einer Betätigung des Betätigungselements durch Aufbringen einer seitlichen Druckkraft resultiert eine seitliche Bewegung des Betätigungselements in horizontaler Richtung. Die Formschrägen ermöglichen eine Umleitung der Horizontalbewegung des Betätigungselements in eine lineare Vertikalbewegung der Rastplatte in Richtung der Sitzlehne und eine daraus resultierende Lösung der form- und/oder kraftschlüssigen Verbindung zwischen Rastplatte und Zahnprofil. Ausführungsbeispiele der Erfindung werden im Folgenden anhand von Zeichnungen näher erläutert.

Dabei zeigen:
- Fig. 1: schematisch eine Seitenansicht einer Kopfstütze in vollständig nach vorn geneigter Position,
- Fig. 2: schematisch eine Seitenansicht einer Kopfstütze in vollständig nach hinten geneigter Position,
- Fig. 3: schematisch eine Vorderansicht einer Kopfstütze,
- Fig. 4: schematisch eine Vorderansicht einer Kopfstütze mit Betätigungselement,
- Fig. 5: schematisch ein Detaildarstellung eines Zahnprofils und
- Fig. 6: schematisch eine Seitenansicht eines Neigungsverstellmechanismus für eine Kopfstütze eines Fahrzeugsitzes.

Einander entsprechende Teile sind in allen Zeichnungen mit den gleichen Bezugszeichen versehen.

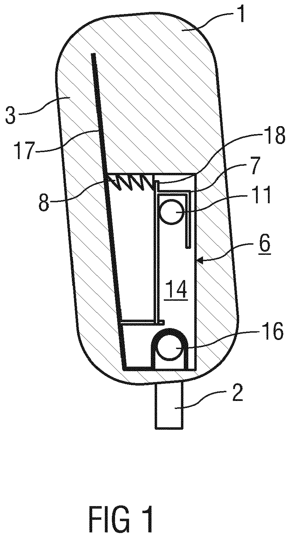

In Figur 1 ist schematisch eine Seitenansicht einer Kopfstütze 1 in vollständig nach vorn geneigter Position, d. h. in einer vorderen Endposition angeordnet, dargestellt.

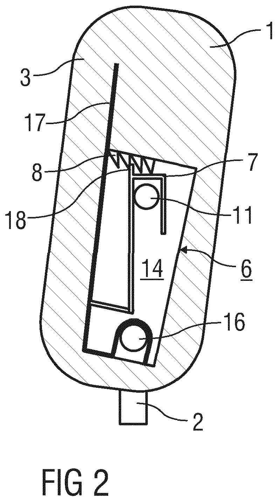

In Figur 2 ist schematisch eine Seitenansicht einer Kopfstütze 1 in vollständig nach hinten geneigter Position, d. h. in einer hinteren Endposition angeordnet, dargestellt.

Die Kopfstütze 1 ist bevorzugt mittels eines Halteelements 2 am oberen Ende einer nicht dargestellten Sitzlehne eines Fahrzeugsitzes angeordnet. Dabei umfasst die Kopfstütze 1 eine Kopfstützenstruktur 17 und zumindest ein Kopfstützenpolster 3, welches zumindest in Richtung des Sitzinsassen weisend an der Kopfstützenstruktur 17 angeordnet ist. In einer bevorzugten Ausführungsform ist die Kopfstützenstruktur 17 allseitig vom Kopfstützenpolster 3 umgeben, so dass die Kopfstütze 1 allseitig gepolstert ist.

Das Halteelement 2 ist bevorzugt u-förmig ausgebildet und umfasst zwei Schenkel 10 und einen waagerecht angeordneten Abschnitt 11. Im Koppelbereich zwischen Schenkel 10 und Abschnitt 11 ist jeweils ein Absatz 12 angeordnet. Dabei umfasst jeder Absatz 12 einen weiteren waagerecht angeordneten Abschnitt 16.

An einem unteren Ende des Halteelements 2 sind die Schenkel 10 als Führungsdorne 4 ausgebildet, welche in herkömmlicher Weise in korrespondierenden Aussparungen in einer Sitzlehne eines nicht dargestellten Fahrzeugsitzes anordenbar sind. Dabei sind die Führungsdorne 4 in der Sitzlehne verschiebbar angeordnet, so dass eine Höhenverstellung der Kopfstütze 1 relativ zum Fahrzeugsitz in Abhängigkeit einer Eintauchtiefe der Führungsdorne 4 in die Sitzlehne ermöglicht ist.

Die Kopfstützenstruktur 17 ist an ihrem unteren Ende schwenkbar mit dem Halteelement 2 gekoppelt. Dabei ist die Kopfstütze 1 um eine Drehachse schwenkbar ausgebildet, welche aus den waagerecht angeordneten Abschnitten 16 des u-förmigen Halteelements 2 der Kopfstütze 1 gebildet ist.

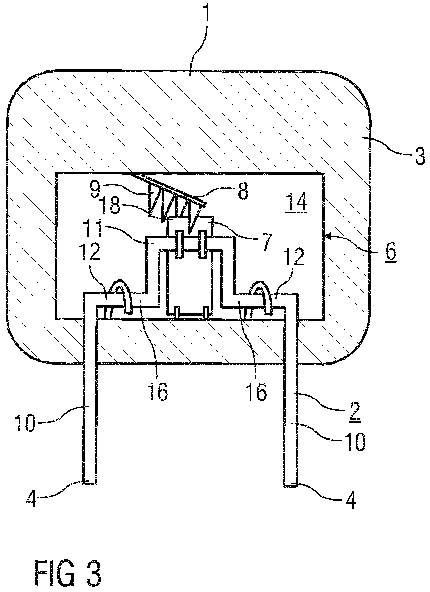

Figur 3 zeigt schematisch eine Vorderansicht der Kopfstütze 1.

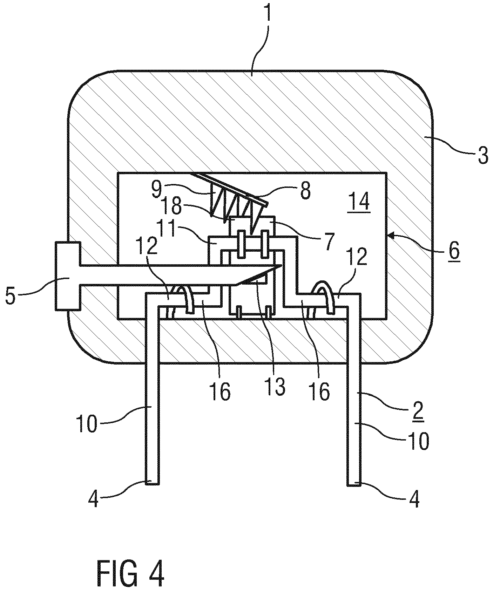

Figur 4 zeigt schematisch eine Vorderansicht der Kopfstütze 1 mit einem Betätigungselement 5.

Der Neigungsverstellmechanismus 6 umfasst zumindest eine Rastplatte 7, ein Zahnprofil 8 und das Betätigungselement 5. Dabei ist die Rastplatte 7 in Richtung der Sitzlehne verschiebbar am Halteelement 2 angeordnet.

Das Zahnprofil 8 ist an der Kopfstütze 1, insbesondere an der Kopfstützenstruktur 17, angeordnet oder ausgeformt, so dass bei einem Schwenken der Kopfstütze 1 um das Halteelement 2 eine Relativbewegung zwischen Kopfstützenstruktur 17 und Rastplatte 7, insbesondere zwischen Rastplatte 7 und Zahnprofil 8, ermöglicht ist.

Eine Seitenkante der Rastplatte 7, vorzugsweise eine obere Seitenkante 18, greift in einem arretierten Zustand der Kopfstütze 1 unter Ausbildung einer form- und/oder kraftschlüssigen Verbindung in das Zahnprofil 8 ein, wodurch die Kopfstütze 1 arretiert, d.h. an einer Schwenkbewegung gehindert, ist.

Das Zahnprofil 8 ist bevorzugt aus einer Mehrzahl von reihenförmig hintereinander angeordneten Zähnen, Rastelementen 9 oder Rastnasen gebildet, wobei eine Anzahl von Zähnen, Rastelementen 9 oder Rastnasen mit einer Anzahl an Einstellpositionen des Neigungsverstellmechanismus 6 korrespondiert.

Zur Lösung der form- und/oder kraftschlüssigen Verbindung zwischen Rastplatte 7 und Zahnprofil 8 und einer somit ermöglichten Neigungsverstellung der Kopfstütze 1 relativ zum Fahrzeugsitz um die Drehachse kann die Rastplatte 7 vom Zahnprofil 8 wegbewegt werden. Um eine solche lineare Bewegung der Rastplatte 7 in Richtung der Sitzlehne zu ermöglichen, ist an der Rastplatte 7 beispielsweise ein Aktuierungselement 13 aus- oder angeformt. Das Aktuierungselement 13 ist dabei zumindest abschnittsweise korrespondierend zum Betätigungselement 5 ausgebildet.

Betätigungselement 5 und Aktuierungselement 13 stehen mittels zweier korrespondierend ausgeformter Formschrägen in mechanischer Wirkverbindung. Aus einer Betätigung des Betätigungselements 5 durch Aufbringen einer seitlich Druckkraft resultiert eine seitliche Bewegung des Betätigungselements 5 in horizontaler Richtung. Die Formschrägen ermöglichen eine Umleitung der Horizontalbewegung des Betätigungselements 5 in eine lineare Vertikalbewegung der Rastplatte 7 in Richtung der Sitzlehne.

In einer alternativen, nicht dargestellten Ausführungsvariante kann das Zahnprofil 8 von der Rastplatte 7 linear wegbewegt werden oder beispielsweise derart rotiert oder geschwenkt werden, dass die form- und/oder kraftschlüssige Verbindung zwischen Rastplatte 7 und Zahnprofil 8 reversibel gelöst wird.

In einer weiteren alternativen, nicht dargestellten Ausführungsvariante kann der form- und/oder kraftschlüssige Eingriff zwischen Rastplatte 7 und Zahnprofil 8 durch eine seitliche Verschiebebewegung der Rastplatte 7 in horizontaler Richtung gelöst werden.

Der Neigungsverstellmechanismus 6 ist im Inneren 14 der Kopfstütze 1 angeordnet. Dabei ist das Innere 14 der Kopfstütze 1 durch eine entsprechende Ausformung der Kopfstützenstruktur 17 derart ausgeformt, das eine Funktion des Neigungsverstellmechanismus 6 vollumfänglich ermöglicht ist.

Das obere Ende des Halteelements 2, der Neigungsverstellmechanismus 6 und die Kopfstützenstruktur 17 sind bevorzugt vollständig oder nahezu vollständig vom Kopfstützenpolster 3 umschlossen. Dadurch ist der bevorzugt aus harten Materialien, beispielsweise Metall und/oder Kunststoff, gebildete Neigungsverstellmechanismus 6 allseitig vom Kopfstützenpolster 3 umschlossen und eine Verletzungsgefahr des Sitzinsassen ist reduziert.

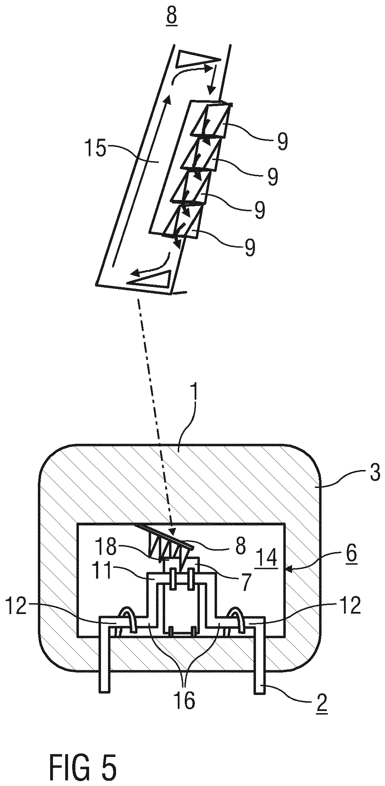

Figur 5 zeigt schematisch eine Detaildarstellung eines Zahnprofils 8. Bei dieser Ausführungsvariante ist seitlich der Rastelemente 9 eine Gleitbahn 15 am Zahnprofil 8 ausgebildet. Die Rastelemente 9 sind dabei widerhakenartig ausgebildet und ermöglichen derart eine Neigungsverstellung der Kopfstütze 1 in Fahrtrichtung durch einfaches Drücken. Die gegensätzliche Bewegung wird durch die widerhakenartigen Rastelemente 9 im normalen Betrieb verhindert, so dass die Kopfstütze 1 bei einem entsprechenden Kontakt mit dem Fahrzeuginsassen arretiert ist.

An einem unteren Ende des Einstellbereichs kann die form- und/oder kraftschlüssige Verbindung zwischen Rastplatte 7 und Rastelement 9 durch ein seitliches Verschieben der Rastplatte 7 gelöst werden. Die Kopfstütze 1 kann in Richtung des oberen Ende des Einstellbereichs geschwenkt werden, wobei die Seitenkante der Rastplatte 7 die Gleitbahn 15 entlang gleitet. Nach erfolgter Neigungseinstellung wird die Rastplatte 7 in ihre Ursprungsposition verschoben, so dass eine form- und/oder kraftschlüssige Verbindung zwischen Rastplatte 7 und zumindest einem Rastelement 9 gebildet und die Kopfstütze 2 derart gegen Schwenkbewegungen arretiert ist.

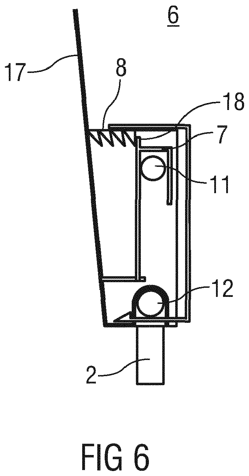

Figur 6 zeigt schematisch eine Seitenansicht des Neigungsverstellmechanismus 6 für eine Kopfstütze 1 eines Fahrzeugsitzes.

### Bezugszeichenliste

- 1: Kopfstütze
- 2: Halteelements
- 3: Kopfstützenpolster
- 4: Führungsdorn
- 5: Betätigungselement
- 6: Neigungsverstellmechanismus
- 7: Rastplatte
- 8: Zahnprofil
- 9: Rastelement
- 10: Schenkel
- 11: Abschnitt
- 12: Absatz
- 13: Aktuierungselement
- 14: Inneren
- 15: Gleitbahn
- 16: waagerechter Abschnitt
- 17: Kopfstützenstruktur
- 18: Seitenkante

## Patentansprüche

1. Höhen- und/oder neigungsverstellbare Kopfstütze (1) für einen Fahrzeugsitz
umfassend zumindest ein Halteelement (2), ein Kopfstützenpolster (3), eine Kopfstützenstruktur (17) und einen Neigungsverstellmechanismus (6), welcher zumindest eine Rastplatte (7), ein Zahnprofil (8) und ein Betätigungselement (5) umfasst, wobei die Rastplatte (7) am Halteelement (2) angeordnet ist und in einem arretierten Zustand des Neigungsverstellmechanismus (6) form- und/oder kraftschlüssig in das Zahnprofil (8), welches an der Kopfstützenstruktur (17) angeordnet ist, eingreift und wobei die Kopfstützenstruktur (17) an ihrem unteren Ende schwenkbar mit dem Halteelement (2) gekoppelt ist und bei einem Schwenken der Kopfstütze (1) um das Halteelement (2) in einem nicht arretierten Zustand des Neigungsverstellmechanismus (6) die form- und/oder kraftschlüssige Verbindung zwischen Rastplatte (7) und Zahnprofil (8) gelöst ist und derart eine Relativbewegung zwischen Rastplatte (7) und Zahnprofil (8) bewirkt ist, wobei
- die Rastplatte (7) verschiebbar am Halteelement (2) angeordnet ist und, **dadurch gekennzeichnet, dass**
- das Betätigungselement (5) und ein Aktuierungselement (13) der Rastplatte (7) mittels zweier korrespondierender ausgeformter Formschrägen in mechanischer Wirkverbindung stehen, wobei das Aktuierungselement (13) zumindest abschnittsweise korrespondierend zum Betätigungselement (5) ausgebildet ist und eine Horizontalbewegung des Betätigungselements (5) in eine lineare Vertikalbewegung der Rastplatte (7) weg vom Rastprofil (8) transformiert wird.

2. Höhen- und/oder neigungsverstellbare Kopfstütze (1) nach Anspruch 1,
**dadurch gekennzeichnet, dass** das Zahnprofil (8) zur reversiblen Lösung der form- und/oder kraftschlüssigen Verbindung zwischen Rastplatte (7) und Zahnprofil (8) von der Rastplatte (7) linear oder schwenkend wegbewegbar ist.

3. Höhen- und/oder neigungsverstellbare Kopfstütze (1) nach Anspruch 1,
**dadurch gekennzeichnet, dass** die Rastplatte (7) in horizontaler Richtung verschiebbar am Halteelement (2) angeordnet ist.

4. Höhen- und/oder neigungsverstellbare Kopfstütze (1) nach einem der vorherigen Ansprüche,
**dadurch gekennzeichnet, dass** das Halteelement (2) im Wesentlichen u-förmig ausgebildet ist und zwei Schenkel (10) und einen waagerecht angeordneten Abschnitt (11) umfasst, wobei im jeweiligen Koppelbereich zwischen Schenkel (10) und Abschnitt (11) jeweils ein Absatz (12) angeordnet ist, welcher jeweils einen weiteren waagerecht angeordneten Abschnitt (16) umfasst.

5. Höhen- und/oder neigungsverstellbare Kopfstütze (1) nach einem der vorherigen Ansprüche,
**dadurch gekennzeichnet, dass** an einem unteren Ende des Halteelements (2) die Schenkel (10) als Führungsdorne (4) ausgebildet sind, welche zumindest abschnittsweise in korrespondierenden Aussparungen in einer Sitzlehne des Fahrzeugsitzes verschiebbar angeordnet sind.

6. Höhen- und/oder neigungsverstellbare Kopfstütze (1) nach einem der vorherigen Ansprüche,
**dadurch gekennzeichnet, dass** die Kopfstütze (1) um eine Drehachse schwenkbar ausgebildet ist, welche aus den waagerecht angeordneten Abschnitten (16) des u-förmigen Halteelements (2) gebildet ist.

7. Höhen- und/oder neigungsverstellbare Kopfstütze (1) nach einem der vorherigen Ansprüche,
**dadurch gekennzeichnet, dass** das Zahnprofil (8) aus einer vorgebbaren Anzahl von reihenförmig hintereinander angeordneten Zähnen, Rastelementen (9) oder Rastnasen gebildet ist.

## Claims

1. Height- and/or inclination-adjustable head restraint (1) for a vehicle seat
comprising at least one holding element (2), a head restraint cushion (3), a head restraint structure (17) and an inclination-adjustment mechanism (6) which comprises at least one latching plate (7), a toothed profile (8) and an actuating element (5), wherein the latching plate (7) is arranged on the holding element (2) and in a locked state of the inclination-adjustment mechanism (6) engages positively and/or non-positively in the toothed profile (8) which is arranged on the head restraint structure (17) and wherein the head restraint structure (17) at its lower end is coupled pivotably to the holding element (2) and, upon pivoting the head restraint (1) about the holding element (2) in a non-locked state of the inclination-adjustment mechanism (6), the positive and/or non-positive connection between the latching plate (7) and the toothed profile (8) is released such that a relative movement is brought about between the latching plate (7) and the toothed profile (8), wherein
- the latching plate (7) is displaceably arranged on the holding element (2) and **characterized in that**
- the actuating element (5) and an activating element (13) of the latching plate (7) cooperate mechanically by means of two corresponding shaped oblique portions, wherein the activating element (13) is configured to correspond at least partially with the actuating element (5) and a horizontal movement of the actuating element (5) is transformed into a linear vertical movement of the latching plate (7) away from the latching profile (8).

2. Height- and/or inclination-adjustable head restraint (1) according to Claim 1, **characterized in that** the toothed profile (8) is able to be moved in a linear or pivotable manner away from the latching plate (7) for the reversible release of the positive and/or non-positive connection between the latching plate (7) and the toothed profile (8).

3. Height- and/or inclination-adjustable head restraint (1) according to Claim 1, **characterized in that** latching plate (7) is arranged on the holding element (2) so as to be displaceable in the horizontal direction.

4. Height- and/or inclination-adjustable head restraint (1) according to one of the preceding claims, **characterized in that** the holding element (2) is of substantially U-shaped configuration and comprises two arms (10) and a horizontally arranged portion (11), wherein one respective shoulder (12) is arranged in the respective coupling region between the arms (10) and the portion (11), said shoulder in each case comprising a further horizontally arranged portion (16).

5. Height- and/or inclination-adjustable head restraint (1) according to one of the preceding claims, **characterized in that** at a lower end of the holding element (2) the arms (10) are configured as guide pins (4) which are displaceably arranged at least partially in corresponding recesses in a backrest of the vehicle seat.

6. Height- and/or inclination-adjustable head restraint (1) according to one of the preceding claims, **characterized in that** the head restraint (1) is configured to be pivotable about a shaft which is formed from the horizontally arranged portions (16) of the U-shaped holding element (2).

7. Height- and/or inclination-adjustable head restraint (1) according to one of the preceding claims, **characterized in that** the toothed profile (8) is formed from a predeterminable number of teeth, latching elements (9) or latching lugs arranged in succession in rows.

## Revendications

1. Appui-tête (1) réglable en hauteur et/ou en inclinaison pour un siège de véhicule, comprenant au moins un élément de retenue (2), un rembourrage d'appui-tête (3), une structure d'appui-tête (17) et un mécanisme de réglage d'inclinaison (6) qui comprend au moins une plaque d'encliquetage (7), un profil denté (8) et un élément de commande (5), la plaque d'encliquetage (7) étant disposée sur l'élément de retenue (2) et, dans un état bloqué du mécanisme de réglage d'inclinaison (6), s'engageant par engagement par correspondance de formes et/ou par force dans le profil denté (8) qui est disposé sur la structure d'appui-tête (17) et la structure d'appui-tête (17) étant accouplée à son extrémité inférieure de manière pivotante à l'élément de retenue (2) et en cas de pivotement de l'appui-tête (1) autour de l'élément de retenue (2), dans un état non bloqué du mécanisme de réglage d'inclinaison (6), la liaison par engagement par correspondance de formes et/ou par force entre la plaque d'encliquetage (7) et le profil denté (8) étant libérée et un mouvement relatif entre la plaque d'encliquetage (7) et le profil denté (8) étant ainsi provoqué,
- la plaque d'encliquetage (7) étant disposée de manière déplaçable sur l'élément de retenue (2), et
**caractérisé en ce que**
- l'élément de commande (5) et un élément d'actionnement (13) de la plaque d'encliquetage (7) sont en liaison fonctionnelle mécanique au moyen de deux biseaux façonnés formés de manière correspondante, l'élément d'actionnement (13) étant réalisé de manière correspondant au moins partiellement à l'élément de commande (5) et un mouvement horizontal de l'élément de commande (5) étant transformé en un mouvement vertical linéaire de la plaque d'encliquetage (7) à l'écart du profil d'encliquetage (8).

2. Appui-tête (1) réglable en hauteur et/ou en inclinaison selon la revendication 1, **caractérisé en ce que** le profil denté (8) peut être déplacé linéairement ou de manière pivotante à l'écart de la plaque d'encliquetage (7) pour relâcher de manière réversible la liaison par engagement par correspondance de formes et/ou par force entre la plaque d'encliquetage (7) et le profil denté (8).

3. Appui-tête (1) réglable en hauteur et/ou en inclinaison selon la revendication 1, **caractérisé en ce que** la plaque d'encliquetage (7) est disposée de manière déplaçable dans la direction horizontale sur l'élément de retenue (2).

4. Appui-tête (1) réglable en hauteur et/ou en inclinaison selon l'une quelconque des revendications précédentes, **caractérisé en ce que** l'élément de retenue (2) est réalisé essentiellement en forme de U et comprend deux branches (10) et une portion (11) disposée horizontalement, un épaulement (12) étant à chaque fois disposé dans la région d'accouplement respective entre la branche (10) et la portion (11), lequel comprend à chaque fois une portion (16) supplémentaire disposée horizontalement.

5. Appui-tête (1) réglable en hauteur et/ou en inclinaison selon l'une quelconque des revendications précédentes, **caractérisé en ce que** les branches (10) au niveau d'une extrémité inférieure de l'élément de retenue (2) sont réalisées en forme de mandrins de guidage (4) qui sont disposés au moins en partie de manière déplaçable dans des évidements correspondants dans un dossier de siège du siège de véhicule.

6. Appui-tête (1) réglable en hauteur et/ou en inclinaison selon l'une quelconque des revendications précédentes, **caractérisé en ce que** l'appui-tête (1) est réalisé de manière à pouvoir pivoter autour d'un axe de rotation qui est formé à partir des portions disposées horizontalement (16) de l'élément de retenue en forme de U (2).

7. Appui-tête (1) réglable en hauteur et/ou en inclinaison selon l'une quelconque des revendications précédentes, **caractérisé en ce que** le profil denté (8) est formé d'un nombre prédéfinissable de dents, d'éléments d'encliquetage (9) ou d'ergots d'encliquetage disposés en rangées les uns derrière les autres.
